# EUROPÄISCHE PATENTSCHRIFT

(11) **EP 0 495 138 B1**
(45) Veröffentlichungstag und Bekanntmachung des Hinweises auf die Patenterteilung: **19.10.1994**
(21) Anmeldenummer: 91100416.6
(22) Anmeldetag: 15.01.1991
(51) Int. Cl.: G01T 1/29

(54) **Auslesevorrichtung mit einem Speicherleuchtschirm**
Read-out apparatus with a luminescent storage panel
Ecran de mémorisation pour la reproduction d'image

(43) Veröffentlichungstag der Anmeldung: 22.07.1992
(73) Patentinhaber: SIEMENS AKTIENGESELLSCHAFT, 80333 München (DE)
(72) Erfinder: Lange, Gottfried, Dipl.-Phys., W-8520 Erlangen (DE); Reinfelder, Hans-Erich, Dr.-Ing., W-8520 Erlangen (DE)

(56) Entgegenhaltungen:
- EP-A- 0 032 521
- EP-A- 0 167 747
- EP-A- 0 387 369

## Beschreibung

Die Erfindung betrifft eine Auslesevorrichtung einer Röntgendiagnostikeinrichtung für einen Speicherleuchtschirm, der ein jeweiliges Röntgenstrahlenbild latent speichert, bei der zur Bildwiedergabe der Speicherleuchtschirm durch eine flächenförmige Abtastung mittels eines durch eine Ablenkvorrichtung abgelenkten Abtaststrahles einer Strahlenquelle bildpunktweise zum Leuchten angeregt wird, mit einer Detektorvorrichtung zum Erfassen des von dem Speicherleuchtschirm emittierten Lichtes und mit einem Bildwiedergabesystem. Derartige Auslesevorrichtungen dienen zum Auslesen eines in einem Speicherleuchtschirm durch eine Röntgenaufnahmevorrichtung erzeugten Röntgenstrahlenbildes zur Bildwiedergabe.

In der EP-A-0 387 369 ist eine derartige Röntgendiagnostikeinrichtung beschrieben, bei der der Speicherleuchtschirm in einer Aufnahmestation mit Röntgenstrahlen bestrahlt wird, so daß in ihm Defektelektronen erzeugt werden, die in Potentialfallen (Traps) gespeichert werden. Anschließend wird der belichtete Speicherleuchtschirm in eine Auslesestation befördert, in der eine Auslesevorrichtung die gesamte Fläche dieses Speicherleuchtschirmes mit einer zusätzlichen Strahlenquelle, beispielsweise einem Laser, bildpunktweise abtastet, so daß die in den Traps gespeicherten Elektronen angeregt werden und in Rekombinationszentren zurückfallen können, wobei die Energiedifferenz in Form von Lichtquanten mit einer gegenüber der Wellenlänge der Strahlenquelle anderen Wellenlänge abgestrahlt wird. Durch einen Detektor wird das derart emittierte Licht erfaßt, so daß das gespeicherte Röntgenstrahlenbild aus dem Speicherleuchtschirm ausgelesen wird. Dieses Bild wird dann in bekannter Weise einem Bildwiedergabesystem zugeführt, das die Bildwiedergabe entweder auf einem Monitor oder als Hardcopy bewirkt.

Zur flächenförmigen Abtastung des Speicherleuchtschirmes wird der Laserstrahl beispielsweise in horizontaler Richtung durch eine holographische Ablenkvorrichtung abgelenkt und in vertikaler Richtung verschoben, so daß alle auf dem Speicherleuchtschirm liegenden Bildpunkte nacheinander angeregt werden. Das von dem Speicherleuchtschirm emittierte Licht wird durch einen optischen Kollektor erfaßt und auf die lichtempfindliche Eingangsfläche eines Detektors oder mehrerer Detektoren geleitet. Das Ausgangssignal des Detektors wird beispielsweise einer normalen Fernsehkette zur Wiedergabe des Röntgenbildes auf einem Monitor zugeführt.

Als Speicherleuchtstoffe können bei derartigen Abtastvorrichtungen die aus der DE-C-3 347 207 bekannten, mit Europium aktivierten Bariumfluor-Bromchlorid-Verbindungen Verwendung finden, die sich durch sichtbares Licht (Photostimulation) anregen lassen. Zur Anregung dieses Speicherleuchtstoffes läßt sich der üblicherweise verwendete He-Ne-Laser verwenden, der gebündelte Strahlen einer Wellenlänge von 633 nm erzeugt.

Derartige Röntgendiagnostikeinrichtungen weisen aber den Nachteil auf, daß bei Schwankungen der Intensität des Laserstrahles Schwankungen im Ausgangssignal des Detektors entstehen, die nicht aufgrund von Helligkeitsunterschieden im Röntgenstrahlenbild hervorgerufen werden. Auch liefern Ungleichmäßigkeiten in der Detektorvorrichtung ein nicht lineares Ausgangssignal in Abhängigkeit von der Stellung der Abtastposition auf der Speicherleuchtschirm, d.h. der Auslenkung des Abtaststrahles.

Um Intensitätsschwankungen des Laserstrahles korrigieren zu können, wird in der EP-A-0 032 521 vorgeschlagen, vor der Auslesung einen Teil des Abtaststrahles auszukoppeln und über den Detektor der Auslesevorrichtung die Helligkeit des Abtaststrahles zu erfassen. Das Ausgangssignal des Detektors steuert die Voreinstellung der Verstärkung des Detektors für die eigentliche Auslesung. Dadurch lassen sich jedoch nur langzeitige Intensitätsschwankungen ausgleichen. Kurzzeitige Intensitätsschwankungen sowie ortsabhängige, durch den Aufbau des Detektors bedingte Intensitätsunterschiede lassen sich jedoch nicht ausgleichen.

Die Erfindung geht von der Aufgabe aus, eine Röntgendiagnostikeinrichtung der eingangs genannten Art zu schaffen, die kompakt aufgebaut ist und bei der die oben genannten Fehler korrigiert werden können.

Die Aufgabe wird erfindungsgemäß dadurch gelöst, daß in dem Strahlengang des Abtaststrahles eine Vorrichtung zur Auskopplung eines Teiles des Abtaststrahles auf eine Korrektur-Detektorvorrichtung angeordnet ist, die derart aufgebaut ist, daß sie die Intensität des Abtaststrahles und den Ort des abgetasteten Bildpunktes erfaßt und ein Korrektursignal erzeugt, und daß die Ausgangssignale der beiden Detektorvorrichtungen im Sinne einer Korrektur einander überlagert werden. Dadurch wird erreicht, daß sowohl Fehler in der Helligkeit des Abtaststrahles als auch Unregelmäßigkeiten im Aufbau der Detektorvorrichtung, die ein in Abhängigkeit vom Ort des abgetasteten Bildpunktes schwankendes Ausgangssignal liefert, korrigiert werden können.

Es hat sich als vorteilhaft erwiesen, wenn die Detektorvorrichtungen in ihrer Wirkungsweise identisch sind. Dies kann dadurch erreicht werden, wenn die Korrektur-Detektorvorrichtung in ihrem Aufbau der Detektorvorrichtung entspricht, beispielsweise ein verkleinerter Nachbau der Detektorvorrichtung ist. Die Detektorvorrichtungen können aber auch identisch ausgebildet sein.

Einen einfachen Aufbau erhält man, wenn die Korrektur-Detektorvorrichtung aus einer Photodiodenzeile besteht, der der nach der Ablenkvorrichtung ausgekoppelte Abtaststrahl zugeführt wird, und wenn die Ausgänge der Photodiodenzeile einer Korrekturschaltung zugeführt werden, die eine elektrische Nachbildung des Übertragungsverhaltens der Detektorvorrichtung enthält. Anstelle der Photodiodenzeile kann aber auch die Korrektur-Detektorvorrichtung nur einen Photodetektor, dem ein Teil des Strahles der Strahlenquelle zugeführt wird, und einen mit der Ablenkvorrichtung verbundenen Geber aufweisen, der ein dem Grad der Ablenkung entsprechendes Signal liefert. Weiterhin sind Ausgangssignale des Photodetektors und des Gebers mit einer elektrischen Nachbildung verbunden, die das Übertragungsverhalten der Detektorvorrichtung nachbildet.

Es hat sich als vorteilhaft erwiesen, wenn die Signale der Detektorvorrichtungen im Sinne einer Normierung miteinander verknüpft werden, indem beispielsweise die Ausgangssignale der Detektorvorrichtungen einer Divisionsstufe zugeführt werden. Die Sichtbarkeit läßt sich verbessern, wenn die verknüpften Ausgangssignale der Detektorvorrichtungen einer Schaltungsstufe mit nichtlinearer Kennlinie, beispielsweise mit einer Wurzelkennlinie, zugeführt werden.

Die Erfindung ist nachfolgend anhand eines in der Zeichnung dargestellten Ausführungsbeispieles näher erläutert. Es zeigen:
- FIG 1: den schematischen Aufbau einer erfindungsgemäßen Röntgendiagnostikeinrichtung und
- FIG 2: bis 4 verschiedene Ausführungsformen des Wiedergabeteiles der erfindungsgemäßen Röntgendiagnostikeinrichtung gemäß FIG 1.

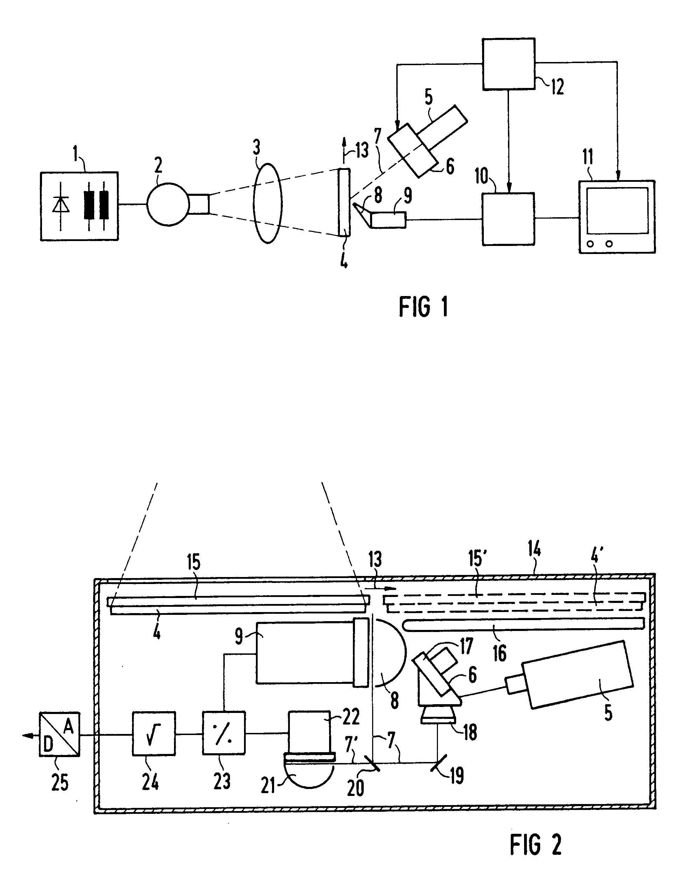

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4, wie bereits beschrieben, Defektelektronen, die in Traps des Speicherleuchtstoffes gespeichert werden, so daß in dem Speicherleuchtschirm 4 nach der Bestrahlung ein latentes Bild gespeichert ist.

Zur Wiedergabe des latenten, gespeicherten Bildes wird üblicherweise der Speicherleuchtschirm 4 durch eine Strahlenquelle, beispielsweise durch einen Laser 5, angeregt. Dem Laser 5 ist eine Ablenkvorrichtung 6 vorgeschaltet, die den Abtaststrahl 7 zeilenweise über den Speicherleuchtschirm 4 ablenkt. Die Ablenkvorrichtung 6 für den Abtaststrahl 7 kann beispielsweise aus einem elektrooptischen Strahlenablenker für die horizontale Ablenkung bestehen. Die vertikale Ablenkung kann dadurch erfolgen, daß der Speicherleuchtschirm 4 in Richtung des Pfeiles 13 verschoben wird, so daß nacheinander die gesamte Fläche des Speicherleuchtschirmes 4 durch den Abtaststrahl 7 bildpunktweise abgetastet werden kann.

Ein Lichtleiter 8 erfaßt das von dem Speicherleuchtschirm 4 emittierte Licht und leitet es auf einen Detektor 9, der die Helligkeit der abgetasteten Bildpunkte erfaßt und in ein elektrisches Signal umwandelt, das einer Wiedergabeschaltung 10 zugeführt wird, die aus den einzelnen analogen Ausgangssignalen des Detektors 9 ein Videosignal zur Darstellung auf einem Monitor 11 erzeugt. Eine Steuereinrichtung 12 bewirkt bei der Wiedergabe die Synchronisation der Ablenkvorrichtung 6, der Wiedergabeschaltung 10 und des Monitors 11. Die Wiedergabeschaltung 10 kann in bekannter Weise Bildspeicher, eine Verarbeitungsschaltung und Wandler aufweisen.

In FIG 2 ist eine derartige Aufnahmestation dargestellt, bei der an einer in einem Gehäuse 14 angeordneten Transportvorrichtung 15 der Speicherleuchtschirm 4 befestigt ist. In der dargestellten Stellung befindet sich die Transportvorrichtung 15 mit dem Speicherleuchtschirm 4 in der ersten Position, der Aufnahmeposition, in der der Speicherleuchtschirm 4 durch die Röntgenstrahlen bestrahlt wird. Nach erfolgter Bestrahlung verschiebt die Transportvorrichtung 15 den Speicherleuchtschirm 4 in Richtung des Pfeiles 13. Dabei wird gleichzeitig der Speicherleuchtschirm 4 durch die unterhalb der Transportvorrichtung 15 angeordnete Auslesevorrichtung 5 bis 9 abgetastet.

Der vom Laser 5 erzeugte Abtaststrahl 7 wird einer holographischen Ablenkvorrichtung 17 als Ablenkvorrichtung 6 zugeführt, die ein Objektiv 18 aufweist, das den Abtaststrahl 7 auf dem Speicherleuchtschirm 4 fokussiert. Eine derartige holographische Ablenkvorrichtung 17 ist beispielsweise in dem Prospekt der Firma Holotec Ltd., Rochester, N.Y., mit Druckzeichen 8/84 ausführlich beschrieben. Damit eine ausreichende Ablenkung des Abtaststrahles 7 über die gesamte Breite des Speicherleuchtschirmes 4 auch bei geringen Abmessungen erfolgen kann, wird der Abtaststrahl 7 über Umlenkspiegel 19 und 20 mehrfach umgeleitet, so daß sich ein gefalteter Strahlengang ergibt. Der Abtaststrahl 7 fällt dabei zwischen einen Lichtleiter 8 und einen Detektor 9, die in der EP-A-0 363 522 ausführlich beschrieben sind. Es lassen sich aber auch die üblichen, aus Quarzglas, Plexiglas oder ähnlichem bestehenden Lichtleiter verwenden.

Der zweite Umlenkspiegel 20 ist dabei erfindungsgemäß ein teildurchlässiger Spiegel, so daß ein Teil des abgelenkten Abtaststrahles 7 als Abtaststrahl 7′ durch den Spiegel 20 durchdringen kann und somit ausgekoppelt wird. Er wird einem beispielsweise verkleinerten Nachbau des ersten Detektorvorrichtung 8, 9, bestehend aus einem Korrektur-Lichtleiter 21 und einem Korrektur-Detektor 22, zugeführt. Dort fällt der Abtaststrahl 7′ entweder auf eine weiße oder eine verspiegelte Fläche, über die er abgelenkt wird, wobei das reflektierte Licht von dem Korrektur-Lichtleiter 21 dem Korrektur-Detektor 22 zugeführt wird, so daß in ihm ein Signal erzeugt wird, das der Helligkeit des Abtaststrahles 7′ an der abgelenkten Stelle und dem Übertragungsverhalten der Detektorvorrichtung 8, 9 entspricht.

Die Ausgangssignale der beiden Detektoren 9 und 22 werden einer Divisionsstufe 23 zugeführt, die aus beiden Signalen im Sinne einer Normierung den Quotienten bilden. Das Ausgangssignal wird durch eine Schaltungsstufe 24 mit Wurzelkennlinie einem Analog/Digital-Wandler 25 zugeführt, der mit der Wiedergabeschaltung 10 verbunden ist.

Ist der Abtastvorgang beendet, so hat die Transportvorrichtung 15 den Speicherleuchtschirm 4 soweit verschoben, daß er sich in der zweiten Position, in der er gestrichelt dargestellt ist (4′, 15′), befindet. In dieser zweiten Position erfolgt nunmehr die Löschung durch eine Löschvorrichtung 16, die, wie dargestellt, unterhalb des Speicherleuchtschirmes 4′ und der Transportvorrichtung 15′ angeordnet sein kann.

Diese gesamte Aufnahme- und Auslesevorrichtung ist in einem Gehäuse 14 untergebracht, das beispielsweise an einem fahrbaren Gestell befestigt sein kann. Dadurch ist es möglich, diese Aufnahmeeinheit bei Bedarf unter eine Patientenliege zu schieben, auf der sich der zu untersuchende Patient 3 befindet, so daß die gewünschten Aufnahmen erstellt werden können. Diese Aufnahmestation kann aber auch fest mit dem Patientenlagerungstisch gekoppelt oder auch an einem Stativ in ihrer Höhe verstellbar befestigt sein.

Anstelle eines verkleinerten Nachbaus der Detektorvorrichtung 8, 9, bei der die Länge des Abtaststrahles 7′ kleiner ist als die Länge des Abtaststrahles 7 zwischen Umlenkspiegel 20 und Speicherleuchtschirm 4, kann auch eine in Größe und Aufbau identische Korrektur-Detektorvorrichtung verwendet werden.

Der Speicherleuchtschirm 4 kann aber auch auf der Transportvorrichtung 15 angebracht sein, die in diesem Falle nur aus einem Rahmen besteht, der die gesamte Aufnahmefläche sowohl nach oben, zur Röntgenröhre hin, und nach unten, zur Abtastvorrichtung 5 bis 9 hin, freigibt.

Wird ein Streustrahlenraster verwendet, so kann der Speicherleuchtschirm 4 mit diesem bspw. durch Klebung direkt befestigt sein. In diesem Falle kann das Streustrahlenraster gleich der Träger der Transportvorrichtung 15 sein.

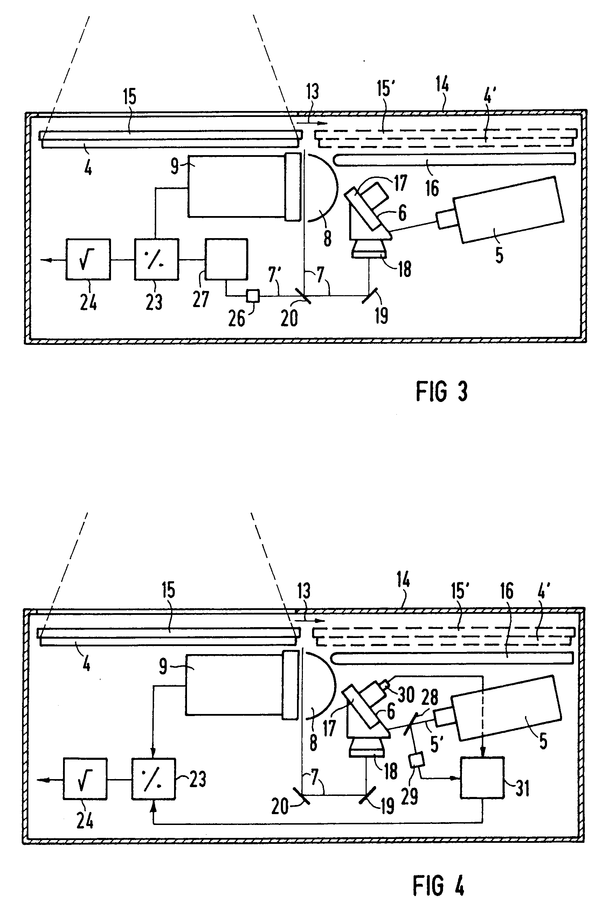

In FIG 3 ist eine weitere Ausführungsform des Aufnahme- und Wiedergabeteiles beschrieben. Der Aufbau gleicht im wesentlichen dabei dem in FIG 2 dargestellten Aufbau. Anstelle des Korrektur-Lichtleiters 21 und des Korrektur-Detektors 22 ist lediglich eine Photodiodenzeile 26 vorgesehen, die mit einer Korrekturschaltung 27 verbunden ist. Diese Korrekturschaltung bewirkt eine elektrische Nachbildung der Detektorvorrichtung 8, 9. Durch die Vielzahl der Photodioden in der Photodiodenzeile 26 erhält man dabei eine Information des Ortes, auf dem der Abtaststrahl 7 auf den Speicherleuchtschirm 4 fällt. Die Größe der Ausgangssignale der Photoelemente der Photodiodenzeile 26 geben dabei die Intensität des Abtaststrahles 7 und 7′ an. Aus diesen Informationen bildet die Korrekturschaltung 27 ein Korrektursignal, das durch die Divisionsstufe 23 mit dem ausgelesenen Signal des Detektors 9 verknüpft wird. Dadurch werden die Fehler, hervorgerufen durch Schwankungen der Intensität des Abtaststrahles 7 sowie das nichtlineare Verhalten des Detektors in Abhängigkeit vom Ort ausgeglichen.

In FIG 4 ist wiederum der Wiedergabeteil der Aufnahmevorrichtung dargestellt, der eine weitere Ausführungsform der Korrekturvorrichtung wiedergibt. Auch hier sind die Komponenten mit gleichem Bezugszeichen gleich denen der in den vorhergehenden Figuren dargestellten Komponenten. Lediglich wird anstelle des teildurchlässigen Umlenkspiegels 20 ein normaler, voll reflektierender Umlenkspiegel 20 verwendet.

Der nicht abgelenkte Laserstrahl 5′ wird durch einen teildurchlässigen Spiegel 28 auf einen Photodetektor 29 abgelenkt. Dies erfolgt vor der Ablenkvorrichtung 6, 17, so daß dieser Photodetektor nur ein Ausgangssignal erzeugt, das der Intensität des Laserstrahles 5′ entspricht. Um eine Ortsinformation zu erhalten und damit eine Korrektur des Übertragungsverhaltens des Detektors 9 durchführen zu können, ist die Ablenkvorrichtung 6 mit einem Geber 30 versehen, der ein Signal erzeugt, das wiedergibt, an welcher Stelle der Abtastzeile der Abtaststrahl 7 auf dem Speicherleuchtschirm 4 auftrifft. Photodetektor 29 und Geber 30 sind mit einer Nachbildung 31 verbunden, die aufgrund des Helligkeitssignales des Photodetektors 29 und des Ortssignales des Geber 30 ein Korrektursignal errechnet, das beispielsweise in der Divisionsstufe 23 dem Ausgangssignal des Detektors 9 überlagert werden kann.

Durch diese erfindungsgemäßen Ausführungen der Röntgendiagnostikeinrichtung erhält man eine einfache und von Fehlern korrigierte Auslesung der in einem Speicherleuchtschirm gespeicherten Röntgenstrahlenbilder mit einem kompakten Aufbau.

## Patentansprüche

1. Auslesevorrichtung (5 bis 9) einer Röntgendiagnostikeinrichtung für einen Speicherleuchtschirm (4), der ein jeweiliges Röntgenstrahlenbild latent speichert, bei der zur Bildwiedergabe der Speicherleuchtschirm (4) durch eine flächenförmige Abtastung mittels eines durch eine Ablenkvorrichtung (6, 17) abgelenkten Abtaststrahles (7) einer Strahlenquelle (5) bildpunktweise zum Leuchten angeregt wird, mit einer Detektorvorrichtung (8, 9) zum Erfassen des von dem Speicherleuchtschirm (4) emittierten Lichtes und mit einem Bildwiedergabesystem (10, 11), **dadurch gekennzeichnet**, daß in dem Strahlengang des Abtaststrahles (7) eine Vorrichtung (20, 28) zur Auskopplung eines Teiles des Abtaststrahles (7) auf eine Korrektur-Detektorvorrichtung (21, 22; 26, 27; 29 bis 31) angeordnet ist, die derart aufgebaut ist, daß sie die Intensität des Abtaststrahles (7) und den Ort des abgetasteten Bildpunktes erfaßt und ein Korrektursignal erzeugt, und daß die Ausgangssignale der beiden Detektorvorrichtungen (8, 9 und 21, 22; 26, 27 oder 29 bis 31) im Sinne einer Korrektur einander überlagert werden.

2. Auslesevorrichtung (5 bis 9) nach Anspruch 1, **dadurch gekennzeichnet**, daß die Detektorvorrichtungen (8, 9 und 21, 22; 26, 27 oder 29 bis 31) in ihrer Wirkungsweise identish sind.

3. Auslesevorrichtung (5 bis 9) nach Anspruch 1 oder 2, **dadurch gekennzeichnet**, daß die Korrektur-Detektorvorrichtung (21, 22) in ihrem Aufbau der Detektorvorrichtung (8, 9) entspricht.

4. Auslesevorrichtung (5 bis 9) nach Ansprüche 1 bis 3, **dadurch gekennzeichnet**, daß die Korrektur-Detektorvorrichtung (21, 22) ein verkleinerter Nachbau der Detektorvorrichtung (8, 9) ist.

5. Auslesevorrichtung (5 bis 9) nach einem der Ansprüche 1 bis 3, **dadurch gekennzeichnet**, daß dir Detektorvorrichtungen (8, 9 und 21, 22) identisch ausgebildet sind.

6. Auslesevorrichtung (5 bis 9) nach Anspruch 1 oder 2, **dadurch gekennzeichnet**, daß die Korrektur-Detektorvorrichtung (26, 27) aus einer Photodiodenzeile (26) besteht, der der nach der Ablenkvorrichtung (6) ausgekoppelte Abtaststrahl (7) zugeführt wird, und daß die Ausgänge der Photodiodenzeile (26) einer Korrekturschaltung (27) zugeführt werden, die eine elektrische Nachbildung des Übertragungsverhaltens der Detektorvorrichtung (8, 9) enthält.

7. Auslesevorrichtung (5 bis 9) nach Anspruch 1 oder 2, **dadurch gekennzeichnet**, daß die Korrektur-Detektorvorrichtung (29 bis 31) einen Photodetektor (29) aufweist, dem ein Teil des Strahles (5′) der Strahlenquelle (5) zugeführt wird, daß sie einen mit der Ablenkvorrichtung (6, 17) verbundenen Geber (30) aufweist, der ein dem Grad der Ablenkung entsprechendes Signal liefert, und daß die Ausgangssignale des Photodetektors (29) und des Gebers (30) mit einer elektrischen Nachbildung (31) verbunden sind, die das Übertragungsverhalten der Detektorvorrichtung (8, 9) nachbildet.

8. Auslesevorrichtung (5 bis 9) nach einem der Ansprüche 1 bis 7, **dadurch gekennzeichnet**, daß die Signale der Detektorvorrichtungen (8, 9 und 21, 22; 26, 27 oder 29 bis 31) im Sinne einer Normierung miteinander verknüpft werden.

9. Auslesevorrichtung (5 bis 9) nach Anspruch 8, **dadurch gekennzeichnet**, daß die Ausgangssignale der Detektorvorrichtungen (8, 9 und 21, 22; 26, 27 oder 29 bis 31) einer Divisionsstufe (23) zugeführt werden.

10. Auslesevorrichtung (5 bis 9) nach einem der Ansprüche 1 bis 3, **dadurch gekennzeichnet**, daß die verknüpften Ausgangssignale der Detektorvorrichtungen (8, 9 und 21, 22; 26, 27 oder 29 bis 31) einer Schaltungsstufe (24) mit einer nichtlinearen Kennlinie zugeführt werden.

## Claims

1. Read-out arrangement (5 to 9) of an X-ray diagnostic device for a luminescent storage screen (4) which stores a respective X-ray image in a latent manner, in which arrangement for the purpose of reproducing the image the luminescent storage screen (4) is stimulated to luminesce pixel by pixel by uniplanar scanning by means of a scanning ray (7) of a ray source (5), which ray is deflected by a deflecting arrangement (6, 17), having a detector arrangement (8, 9) for the detection of the light emitted from the luminescent storage screen (4) and having an image-reproducing system (10, 11), characterised in that arranged in the ray path of the scanning ray (7) there is an arrangement (20, 28) for coupling out a portion of the scanning ray (7) to a correction detector arrangement (21, 22; 26, 27; 29 to 31), which is constructed in such a way that it detects the intensity of the scanning ray (7) and the location of the scanned pixel and generates a correction signal, and in that the output signals of the two detector arrangements (8, 9 and 21, 22; 26, 27 or 29 to 31) are superimposed for the purposes of a correction.

2. Read-out arrangement (5 to 9) according to claim 1, characterised in that the detector arrangements (8, 9 and 21, 22: 26, 27 or 29 to 31) are identical in terms of their mode of operation.

3. Read-out arrangement (5 to 9) according to claim 1 or 2, characterised in that the correction detector arrangement (21, 22) corresponds to the detector arrangement (8, 9) in terms of its construction.

4. Read-out arrangement (5 to 9) according to one of the claims 1 to 3, characterised in that the correction detector arrangement (21, 22) is a scaled-down duplicate of the detector arrangement (8, 9).

5. Read-out arrangement (5 to 9) according to one of the claims 1 to 3, characterised in that the detector arrangements (8, 9 and 21, 22) are formed in an identical manner.

6. Read-out arrangement (5 to 9) according to claim 1 or 2, characterised in that the correction detector arrangement (26, 27) consists of a photodiode line (26) to which the scanning ray (7) coupled out after the deflecting arrangement (6) is fed, and in that the outputs of the photodiode line (26) are fed to a correction circuit arrangement (27) which contains an electrical simulator of the transient response of the detector arrangement (8, 9).

7. Read-out arrangement (5 to 9) according to claim 1 or 2, characterised in that the correction detector arrangement (29 to 31) has a photodetector (29) to which a portion of the ray (5′) of the ray source (5) is fed, in that it has a transmitter (30) which is connected to the deflecting arrangement (6, 17) and supplies a signal corresponding to the degree of the deflection, and in that the output signals of the photodetector (29) and of the transmitter (30) are connected with an electrical simulator (31) which simulates the transient response of the detector arrangement (8, 9).

8. Read-out arrangement (5 to 9) according to one of the claims 1 to 7, characterised in that the signals of the detector arrangements (8, 9 and 21, 22; 26, 27 or 29 to 31) are combined with each other for the purposes of standardization.

9. Read-out arrangement (5 to 9) according to claim 8, characterised in that the output signals of the detector arrangements (8, 9 and 21, 22; 26, 27 or 29 to 31) are fed to a division stage (23).

10. Read-out arrangement (5 to 9) according to one of the claims 1 to 9, characterised in that the combined output signals of the detector arrangements (8, 9 and 21, 22; 26, 27 or 29 to 31) are fed to a circuit arrangement stage (24) having a non-linear characteristic.

## Revendications

1. Dispositif de lecture (5 à 9) d'un appareil de radiodiagnostic pour un écran luminescent de mémorisation (4), qui mémorise à l'état latent une image radiographique, et dans lequel, pour la reproduction de l'image, I'écran luminescent de mémorisation (4) est excité à la luminescence, en chaque point d'image, au moyen d'un balayage de surface réalisé à l'aide d'un faisceau de balayage (7) d'une source de rayonnement (5), dévié par un dispositif de déviation (6, 17), comportant un dispositif de détection (8, 9) servant à détecter la lumière émise par l'écran luminescent de mémorisation (4), et un système de reproduction d'images (10, 11), caractérisé par le fait que dans le trajet du rayonnement de balayage (7) est agencé un dispositif (20, 28) servant à découpler une partie du faisceau de balayage (7) en direction d'un dispositif de détection de correction (21, 22; 26, 26; 29 à 31) qui est constitué de telle façon qu'il détecte l'intensité du faisceau de balayage (7) et l'emplacement du point d'image balayé, et produit un signal de correction, et que les signaux de sortie du dispositif de détection (8, 9 et 21, 22; 26, 27 ou 29 à 31) sont superposés l'un à l'autre dans le sens d'une correction.

2. Dispositif de lecture (5 à 9) suivant la revendication 1, caractérisé par le fait que les modes d'action des dispositifs de détection (8, 9 et 21, 22; 26, 27 ou 29 à 31) sont identiques.

3. Dispositif de lecture (5 à 9) suivant la revendication 1 ou 2, caractérisé par le fait que l'agencement du dispositif de détection de correction (21, 22) correspond à celui du dispositif de détection (8, 9).

4. Dispositif de lecture (5 à 9) suivant l'une des revendications 1 à 3, caractérisé par le fait que le dispositif de détection de correction (21, 22) est une copie de taille réduite du dispositif de détection (8, 9).

5. Dispositif de lecture (5 à 9) suivant l'une des revendications 1 à 3, caractérisé par le fait que les dispositifs de détection (8, 9 et 21, 22) sont identiques.

6. Dispositif de lecture (5 à 9) suivant la revendication 1 ou 2, caractérisé par le fait que le dispositif de détection de correction (26, 27) est constitué par une ligne de photodiodes (26) à laquelle est envoyé le faisceau de balayage (7) qui est découplé en aval du dispositif de balayage (6), et que les signaux de sortie de la ligne de photodiodes (26) sont envoyés à un circuit de correction (27) qui contient une simulation électrique du comportement de transmission du dispositif de détection (8, 9).

7. Dispositif de lecture (5 à 9) suivant la revendication 1 ou 2, caractérisé par le fait que le dispositif de détection de correction (29 à 31) comporte un photodétecteur (29) auquel est envoyée une partie du faisceau (5-16) de la source de rayonnement (5), que ce dispositif possède un générateur (30) relié au dispositif de balayage (6, 17) et qui délivre un signal correspondant au degré de déviation, et que les signaux de sortie du photodétecteur (22) et du générateur (30) sont envoyés à une unité de simulation électrique (31) qui simule le comportement de transmission du dispositif de détection (8, 9).

8. Dispositif de lecture (5 à 9) suivant l'une des revendications 5 à 7, caractérisé par le fait que les signaux des dispositifs de détection (8, 9 et 21, 22; 26, 27, 29 à 31) sont combinés entre eux dans le sens d'une normalisation.

9. Dispositif de lecture (5 à 9) suivant la revendication 8, caractérisé par le fait que les signaux de sortie des dispositifs de détection (8, 9 et 21, 22; 26, 27 ou 29 à 31) sont envoyés à un étage diviseur (23).

10. Dispositif de lecture (5 à 9) suivant l'une des revendications 1 à 9, caractérisé par le fait que les signaux de sortie combinés du dispositif de détection (8, 9 et 21, 22; 26, 27 ou 29 à 31) sont envoyés à un étage de circuit (24) à courbe caractéristique non linéaire.
